(19) Europäisches Patentamt
European Patent Office
Office européen des brevets

(11) **EP 2 813 283 B1**

(12) **FASCICULE DE BREVET EUROPEEN**

(45) Date de publication et mention
de la délivrance du brevet:
**05.04.2017 Bulletin 2017/14**

(51) Int Cl.:
***B01J 8/02*** *(2006.01)*      ***B01J 8/18*** *(2006.01)*
***B01D 3/20*** *(2006.01)*      *C10G 49/00* *(2006.01)*

(21) Numéro de dépôt: **14305719.8**

(22) Date de dépôt: **16.05.2014**

(54) **Dispositif de distribution d'un fluide**

Vorrichtung zur Verteilung eines Fluids

Device for dispensing a fluid

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.06.2013 FR 1355365**

(43) Date de publication de la demande:
**17.12.2014 Bulletin 2014/51**

(73) Titulaire: **AXENS**
**92508 Rueil Malmaison Cedex (FR)**

(72) Inventeurs:
• **LE COZ, Jean-François**
**78100 SAINT GERMAIN EN LAYE (FR)**
• **FERRE, Daniel**
**69560 SAINT CYR SUR RHONE (FR)**
• **COLLADO, Cyril**
**69001 LYON (FR)**

(74) Mandataire: **Schmitt, Nicolas A.J.**
**IFP Energies nouvelles**
**Département Propriété Industrielle**
**1 & 4 avenue de Bois-Préau**
**92852 Rueil-Malmaison Cedex (FR)**

(56) Documents cités:
**FR-A- 1 534 025     FR-A1- 2 982 172**
**GB-A- 447 800**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

L'invention concerne un dispositif de distribution d'un fluide monophasique ou diphasique dans un milieu ambiant monophasique ou polyphasique de densité apparente plus élevée que celle du fluide à distribuer.

Le dispositif selon l'invention trouve notamment des applications dans des réacteurs rencontrés dans des unités de raffinage, de pétrochimie ou de traitement de charges issues du traitement de la biomasse.

Le dispositif selon l'invention permet en particulier d'améliorer la distribution d'un gaz ou un mélange de gaz dans un milieu liquide ou un milieu comprenant un solide fluidisé. Il est par exemple particulièrement bien adapté à une utilisation dans les appareillages suivants :

- réacteurs de procédés FCC (Craquage Catalytique en lit Fluidisé ou Fluidized Catalytic Cracking selon la terminologie anglo-saxonne);
- réacteurs de régénération de catalyseurs, par exemple de craquage catalytique ;
- réacteurs comprenant un lit fluidisé de catalyseurs;
- réacteurs d'hydrotraitement ou d'hydrocraquage fonctionnant en écoulement ascendant avec une entrée d'un flux diphasique gaz/liquide ou gaz/solide dans le fond de l'enceinte;
- réacteurs slurry;
- strippeurs, sécheurs, aérateurs ou humidificateurs.

## Etat de la technique

Les dispositifs de distribution de gaz sont généralement utilisés lorsqu'un gaz ou un mélange de gaz doit être réparti de façon homogène afin de garantir une dissolution et un mélange uniforme entre le gaz et une autre phase qui est soit liquide, soit solide.

De tels dispositifs sont par exemple mis en oeuvre dans une enceinte d'un réacteur afin de conduire des réactions nécessitant une distribution homogène entre le gaz et un liquide ou entre un gaz et un solide fluidisé. On peut citer en exemple les réactions d'hydrotraitement qui mettent en jeu un gaz qui est de l'hydrogène et un liquide qui est une coupe d'hydrocarbures en présence d'un catalyseur. Afin d'assurer les performances catalytiques et des taux de conversion poussés, l'hydrogène doit être distribué de manière homogène dans la phase liquide d'hydrocarbures avant le contact du mélange diphasique $H_2$/hydrocarbures avec le lit catalytique.

Ces dispositifs peuvent être également installés dans des réacteurs de régénération ou d'activation de catalyseurs mettant en jeu un gaz. On peut par exemple citer les procédés de régénération par oxychloration ou encore les procédés d'activation par sulfuration et/ou réduction de catalyseurs.

Enfin les distributeurs de gaz peuvent être employés pour injecter un gaz dit de "fluidisation" dans un lit catalytique afin de maintenir un état fluidisé des grains de catalyseurs.

Le document US 5,571,482 divulgue un appareillage permettant de contrôler la température d'un catalyseur pendant sa régénération (catalyst cooler selon la terminologie anglo-saxonne). Cet appareillage est utilisé avec un système de régénération de catalyseur à deux étages et dans le cadre d'un procédé de craquage catalytique en lit fluidisé (FCC). Dans ce document, un distributeur de type "champignon" (mushroom type distributor selon la terminologie anglo-saxonne) est utilisé pour distribuer le catalyseur et le gaz de fluidisation dans la phase dense du lit fluidisé du régénérateur.

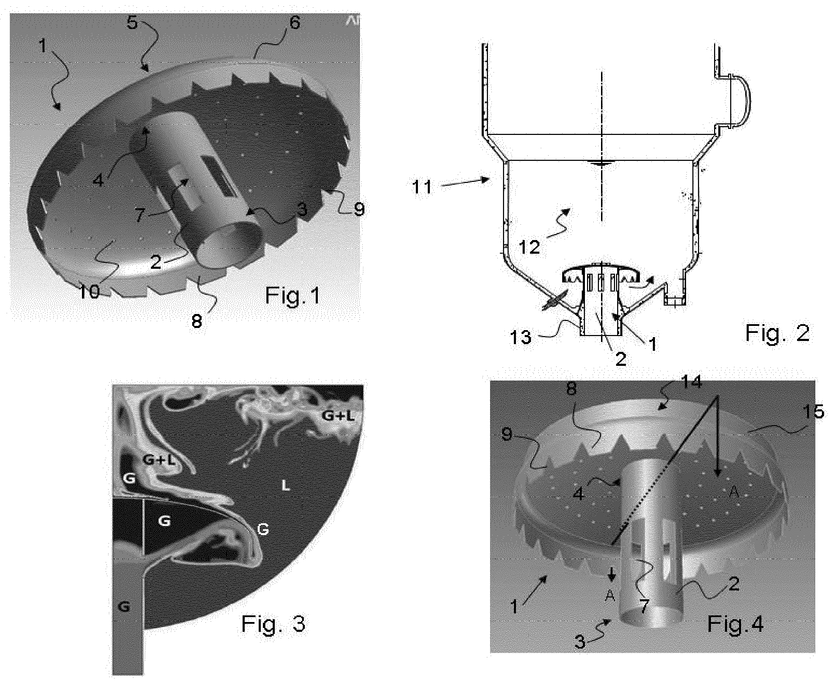

En référence à la figure 1, le distributeur de type "champignon" selon l'art antérieur comprend:

- un tube creux d'admission du gaz ayant une première et seconde extrémité, le tube étant pourvu d'ouvertures pour laisser une partie du gaz qui est alimenté via le tube;
- un couvercle ayant une forme lenticulaire, de section circulaire et présentant une surface externe convexe et une surface interne concave, le couvercle étant solidaire de la seconde extrémité dudit tube par la surface interne concave. Le couvercle est en outre pourvu de trous traversant aptes à laisser passer le gaz et comprend en outre à son extrémité libre une jupe circulaire s'étendant vers la première extrémité du tube creux. Le volume interne est défini comme étant le volume circonscrit par le couvercle et servant de réservoir de gaz à distribuer à travers les trous traversant.

En fonctionnement, le gaz qui s'échappe à travers les ouvertures du tube d'admission s'accumule en dessous jusqu'à une certaine élévation voisine du bord inférieur. Ainsi une différence de pression est établie entre la face supérieure et la face inférieure du couvercle et qui est égale à la hauteur de la poche de gaz ($H_{gaz}$) multipliée par la différence de masse volumique entre gaz et milieu ambiant ($rho_{ambiant}$ - $rho_{gaz}$) et par la constante de gravité (g):

$$dP = H_{gaz}*(rho_{ambiant} - rho_{gaz})*g$$

Cette différence de pression est mise à contribution pour répartir le gaz accumulé sous le couvercle et sur toute son aire projetée au moyen des trous calibrés dont le nombre et l'espacement sont calculés pour que la surface débitante totale des trous ne suffise pas pour laisser passer l'intégralité du gaz entrant dans l'enceinte.

Ainsi une portion du gaz qui est injecté et qui s'échappe du tube déborde du bord inférieur de la jupe du couvercle pour assurer la présence constante de la poche de gaz sous le couvercle et la continuité du fonctionnement du distributeur.

Bien qu'étant fonctionnellement valable, ce dispositif de distribution de gaz est perfectible. En effet il a été constaté que le gaz débordant sous le bord inférieur (au niveau de la jupe) du distributeur ne se détache pas rapidement de ce bord, mais au contraire reste à proximité de la surface supérieure du couvercle et continue à la longer très loin du bord, de manière qu'il se crée un mouvement centripète qui s'exerce sur le gaz. En conséquence, le gaz a tendance à se concentrer vers l'axe central du dispositif d'où il se détache et, par un effet de cheminée, à former un jet unique au centre de l'enceinte. Par ailleurs la fraction du gaz passant par les trous du couvercle se trouve alors en partie happée par ce panache de gaz provenant du bord inférieur de manière qu'elle est également entraînée vers l'axe central du distributeur, créant ainsi une non-uniformité dans la distribution du gaz au dessus du couvercle.

Un but de l'invention est d'améliorer le fonctionnement du distributeur de fluide décrit ci-dessus et en particulier de proposer un distributeur du type "champignon" qui réalise une distribution uniforme du fluide sortant dudit distributeur tout en réduisant le phénomène de formation d'un panache central de fluide en sorti du distributeur.

**Résumé de l'invention**

La présente invention concerne donc un dispositif de distribution d'un fluide comprenant:

- au moins un moyen d'acheminement du fluide comportant des ouvertures et ayant une première et seconde extrémité ;
- un couvercle comprenant un corps principal ayant la forme d'une cloche, le corps principal ayant une surface externe et une surface interne et est solidaire de la seconde extrémité du moyen d'acheminement du fluide par la surface interne, ledit corps principal étant prolongé par une jupe s'étendant dans le sens de la seconde extrémité vers la première extrémité du moyen d'acheminement du fluide et est pourvu d'une pluralité de trous, et dans lequel le couvercle comprend au moins un moyen de déflection, disposé sur sa surface externe, et configuré pour diriger ou maintenir le fluide vers ou à la périphérie dudit couvercle selon la revendication 1.

Le dispositif selon l'invention est une amélioration substantielle du distributeur selon l'art antérieur de la figure 1 grâce à l'ajout d'un moyen de déflection disposé sur la surface externe du couvercle. Dans le cadre de l'invention, on entend désigner par le terme "moyen de déflection" non seulement des moyens qui permettent d'empêcher le fluide s'échappant du bord inférieur (ou extrémité libre) de la jupe de remonter le long de la surface externe du couvercle mais aussi, des moyens qui sont conçus pour dévier et éloigner du centre du couvercle le fluide s'échappant du bord inférieur (ou extrémité libre) de la jupe.

Ce moyen de déflection permet ainsi de forcer le fluide débordant sous le bord inférieur de la jupe à se détacher de la surface supérieure et donc de réduire voire annuler la force centripète qui a pour effet de créer un panache central de fluide. La distribution uniforme du fluide s'en trouve améliorée du fait que la fraction de fluide passant par les trous ne subit plus une succion vers l'axe central du distributeur mais au contraire forme des globules de fluide indépendant (e.g. des bulles lorsque le fluide est un gaz) qui sont répartis de manière idéale sur toute l'aire projetée du distributeur conformément à l'implantation desdits trous. De préférence, le moyen de déflection est disposé sur la surface externe du corps principal et est solidaire dudit corps principal.

De préférence le moyen d'acheminent du fluide est un tube.

De préférence, le corps principal est de forme lenticulaire de section circulaire et prolongé par une jupe cylindrique. Alternativement, le corps principal a une forme tronconique prolongé par une jupe cylindrique.

Le moyen de déflection comprend une surface déflectrice et le moyen de déflection forme un angle $\alpha$ avec l'axe de la jupe compris entre 0 et 70°.

De façon avantageuse, la surface déflectrice est essentiellement en alignement avec ladite jupe et l'angle $\alpha$ est essentiellement égal à 0°. Dans cette forme de réalisation, le moyen de déflection s'étend ainsi dans une direction ascendante et pratiquement verticale par rapport à la jupe.

Selon un mode de réalisation préféré, le moyen de déflection forme une collerette circulaire continue, agencée à la périphérie du couvercle. De préférence la collerette s'étend dans une direction ascendante et pratiquement verticale par rapport à la jupe.

Avantageusement la jupe comporte des encoches situées au niveau de l'extrémité libre de ladite jupe afin de maintenir une interface fluide/milieu ambiant stable (limiter les fluctuations de niveau de l'interface) sous le couvercle du dispositif de distribution. De façon préférée, les encoches sont de forme triangulaire ou rectangulaire.

Lorsque la jupe du dispositif de distribution comporte des encoches, le moyen de déflection est disposé à un niveau situé au-dessus desdites encoches.

De façon avantageuse pour assurer une répartition homogène du fluide au-delà du couvercle, les trous traversant formés dans le couvercle sont disposés de manière concentrique avec un pas régulier sur le corps principal. De préférence, les trous traversant sont de section circulaire.

Dans le cadre de l'invention, le fluide est de préférence un gaz, un liquide, un mélange gaz/liquide ou un mélange gaz/solide. Le dispositif permet de distribuer le fluide dans un milieu ambiant monophasique ou polyphasique de densité apparente plus élevée que celle du fluide à distribuer. Le milieu ambiante est par exemple un gaz, un liquide, un mélange gaz/liquide ou un mélange gaz/solide fluidisé dans le gaz.

Le distributeur selon l'invention trouve en particulier une application dans le cas où le fluide est un gaz qui doit être réparti de façon homogène dans une milieu ambiant qui peut être liquide, soit une phase comprenant du solide fluidisé par un gaz.

Le dispositif de distribution s'applique en particulier pour la mise en oeuvre des réactions catalytiques nécessitant un bon mélange d'une phase gazeuse et d'une phase liquide. On citera de façon non limitative l'hydrotraitement d'hydrocarbures dans lequel la phase gazeuse à distribuer comprend majoritairement de l'hydrogène et le milieu ambiant liquide est constitué d'un mélange d'hydrocarbures. Par le terme "hydrotraitement", on entend désigner par exemple l'hydrocraquage, l'hydrodésulfuration, l'hydrodéazotation, d'hydrogénation sélective ou totale, l'hydrodémétallation de coupes hydrocarbures.

Le dispositif de l'invention s'applique également aux cas de l'hydrogénation sélective des essences de vapocraquage, de l'hydrogénation des composés aromatiques dans des coupes aliphatiques et/ou naphténiques et de l'hydrogénation des oléfines dans des coupes aromatiques. Le dispositif selon l'invention trouve aussi son application dans d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Enfin le dispositif de distribution selon l'invention trouve une application particulière pour la distribution d'un gaz dans un milieu ambiant fluidisé comprenant un solide (e. g. des grains de catalyseur) en suspension dans un gaz qui peut être le même ou différent du gaz qui est distribué au moyen du dispositif.

L'invention a également pour objet un réacteur comprenant une enceinte et un dispositif de distribution selon l'invention. Au sens de la présente invention, le terme "réacteur" désigne tout dispositif comprenant une enceinte apte à recevoir le dispositif de distribution. Il peut s'agir par exemple d'un réacteur dans lequel se déroule une réaction de transformation chimique.

Selon une forme de réalisation, le réacteur selon l'invention comprend un lit granulaire qui est placé en aval dudit distributeur. Par "lit granulaire" on entend un ensemble de particules solides ayant la forme de grains, ces grains pouvant avoir une forme quelconque mais le plus souvent approximativement cylindrique ou sphérique, et ayant des dimensions typiques de l'ordre de quelques millimètres. Ces solides granulaires présentent avantageusement une activité catalytique. De façon préférée, le dispositif de mélange et de distribution de la présente invention est intégré dans un réacteur pouvant contenir un ou plusieurs lits granulaires fixes successifs et séparés entre eux.

De façon alternative, le réacteur peut comprendre un lit fluidisé de catalyseurs et dans lequel le dispositif de distribution est immergé. Ce type de réacteur est par exemple mis en oeuvre pour régénérer des catalyseurs au moyen d'un gaz de régénération; dans ce cas on peut utiliser le vocable "régénérateur" à la place de réacteur.

L'invention porte également sur l'utilisation d'un réacteur tel que défini plus haut dans un procédé de traitement d'une charge d'hydrocarbures ou dans un procédé de traitement de catalyseurs contenu dans un lit granulaire ou pour le traitement de catalyseur en lit fluidisé. On entend, dans le cadre de la présente invention, désigner par le terme "traitement de catalyseurs" tout traitement modifiant la composition chimique du catalyseur tel que par exemple la sulfuration ou la réduction de catalyseurs.

**Description détaillée de l'invention**

D'autres caractéristiques et avantages de l'invention seront mieux compris et apparaîtront clairement à la lecture de la description faite ci-après en se référant aux dessins parmi lesquels :

- la figure 1 représente une vue en perspective d'un dispositif de distribution selon l'art antérieur,
- la figure 2 représente une vue en perspective de l'intérieur d'une enceinte qui peut être par exemple celle d'un réacteur ou d'un régénérateur équipé d'un dispositif de distribution selon l'art antérieur.
- la figure 3 représente un exemple de simulation, au moyen d'une modélisation numérique de type CFD (Computational Fluid Dynamics selon la terminologie anglo-saxonne), des écoulements de liquide et de gaz à travers le dispositif de distribution de l'art antérieur.
- la figure 4 représente une vue en perspective d'un premier mode de réalisation d'un dispositif de distribution selon l'invention.
- la figure 5 représente une vue en coupe du dispositif de distribution de la figure 4.
- la figure 6 représente un exemple de simulation, au moyen d'une modélisation numérique de type CFD (Computational Fluid Dynamics selon la terminologie anglo-saxonne), des écoulements de liquide et de gaz à travers le dispositif de distribution de la figure 4.
- la figure 7 représente une vue en coupe d'un second mode de réalisation d'un dispositif de distribution selon l'invention.
- la figure 8 est une vue agrandie de la partie encadrée de la jupe du dispositif de distribution de la figure 7.

Généralement, des éléments identiques sont dénotés par des mêmes références dans les figures.

La figure 1 montre un dispositif de distribution 1 d'un fluide par exemple un gaz ou un mélange de gaz selon l'art antérieur, du type "champignon", réalisé en métal ou alliage métallique (acier au carbone, acier faiblement allié, acier austénitique). Ce dispositif comprend un tube d'admission 2, ayant une première et une seconde extrémité 3,4 et un couvercle qui est monté sur la seconde extrémité 4 dudit tube 2, par exemple par soudage, vissage, coincement ou clipsage.

Le couvercle 5 est formé d'un corps principal 6 en forme de cloche, qui est prolongé par une jupe 8 s'étendant dans la direction de la première extrémité 3 du tube d'admission 2. Dans le mode de réalisation particulier de la figure 1, le corps principal 6 est de forme lenticulaire avec une section circulaire et est prolongé par une jupe cylindrique. Selon une autre forme de réalisation, le corps principal du dispositif selon l'invention peut être également de forme tronconique.

Le couvercle 5 est dimensionné de manière à couvrir une surface qui est supérieure à celle de la section du tube d'admission 2. Le diamètre du corps principal est par ailleurs choisi en fonction du diamètre interne (ID) du réacteur dans lequel le dispositif est placé. De manière préférée, le rapport entre le diamètre du corps principal et le diamètre interne (ID) du réacteur est compris entre 0,1 et 0,8 et de préférence compris entre 0,5 et 0,7. Par exemple le diamètre du corps principal est compris entre 1 et 3 mètres.

Le couvercle possède une surface externe convexe se projetant au dessus du couvercle et dans une direction opposée au tube d'admission 2 et une surface interne concave se projetant dans la direction du tube d'admission 2.

Le tube d'admission 2 permet d'amener le fluide, par exemple un gaz ou un mélange diphasique (gaz/liquide) ou (gaz/solide), à l'intérieur d'une enceinte dans lequel ledit dispositif 1 est placé, comme montré à la figure 2.

Le tube d'admission 2 est de préférence disposé au centre du couvercle 2, c'est-à-dire au centre du corps principal 6. Le tube 2 comprend en outre des ouvertures 7 qui peuvent être de section circulaire ou rectangulaire (comme montré sur la figure 1) ou toute autre forme qui permettent au fluide de sortir du tube d'admission 2. Les ouvertures 7 sont de préférence disposées dans la moitié supérieure du tube 2.

Comme montré sur la figure 1, la direction de la jupe 8 et celle du tube d'admission 2 sont sensiblement parallèles entre elles. Cependant, dans le cadre de l'invention les deux directions peuvent former un angle compris entre 0° et 45°.

La jupe 8 comprend par ailleurs des encoches ou découpes 9, par exemple de section triangulaire, qui communiquent avec l'extrémité libre de la jupe 8.

Le corps principal 6 est pourvu d'une pluralité de trous traversant ou orifices 10, disposés de manière concentrique et avec de préférence un pas régulier. Les orifices 10 sont de préférence de section circulaire avec un diamètre calibré, qui est généralement compris entre 5 et 50 mm, de préférence entre 10 et 20 mm. La densité de trous peut varier de 20 à 200 par mètre carré.

Le dispositif de distribution 1 est mis en oeuvre dans des réacteurs dans lesquels il doit se produire une diffusion uniforme du fluide dans l'enceinte dudit réacteur. En particulier ce dispositif est adapté pour conduire des réactions nécessitant un contact étroit entre un gaz (ou un mélange de gaz) avec un liquide et/ou un solide.

Le dispositif selon l'invention, est généralement disposé dans un réacteur dans lesquels on réalise par exemple des réactions de conversion catalytiques ou des réactions de transformation de catalyseurs, e.g. activation par réduction ou sulfuration ou encore de traitement de régénération, au moyen d'un gaz ou d'un mélange de gaz.

Comme montré sur la figure 2, le dispositif de distribution 1 est agencé dans la partie inférieure de l'enceinte 12 du réacteur 11, grâce à un manchon 13 faisant partie intégrante du réacteur 11 qui reçoit une partie du tube d'admission 2 du dispositif 1. Ainsi le fluide à distribuer est envoyé dans l'enceinte 12 selon un courant ascendant.

Le réacteur 11 peut être du type lit fluidisé comprenant une enceinte 12 contenant un lit fluidisé de catalyseurs, i.e. les grains de catalyseur sont en suspension dans la phase gazeuse contenue dans l'enceinte. Un tel réacteur (ou régénérateur) en lit fluidisé est notamment utilisé pour la régénération de catalyseurs, par exemple de FCC, au moyen d'un gaz de combustion. Dans une telle application, le dispositif de distribution 1 selon l'invention qui est plongé dans un milieu ambiant constitué essentiellement de gaz et de solide en suspension, est alimenté avec un mélange diphasique comprenant un gaz de convoyage et le catalyseur solide à régénérer.

Selon un autre mode d'application, l'enceinte 12 est comprise dans un réacteur 11 du type réacteur à lit catalytique fixe dans lequel un lit granulaire de catalyseurs (non représenté) supporté par un plateau est agencé en aval du dispositif de distribution 1. Un tel type de réacteur en flux ascendant est mis en oeuvre par exemple pour l'hydrotraitement de charge d'hydrocarbures qui nécessite d'avoir une bonne distribution du gaz (l'hydrogène) et du liquide (la charge d'hydrocarbures) en amont du lit de catalyseurs. Pour cette application, un mélange diphasique contenant le gaz réactionnel en mélange avec la charge liquide d'hydrocarbures à traiter est envoyé dans le réacteur au moyen du dispositif de distribution 1 dans l'enceinte 12 du réacteur 11.

En référence à la figure 2, on note que le diamètre du couvercle 5 est inférieure au diamètre interne de l'enceinte 12 de sorte qu'une partie du fluide injecté puisse s'échapper des ouvertures 7 du tube d'admission 2 et circuler librement dans l'enceinte 12.

Le fonctionnement du dispositif de distribution est décrit ci-dessous dans le cas où le fluide distribué est un gaz et le milieu ambiant est un liquide plus dense que le gaz.

Le gaz est envoyé à travers le tube d'admission 2 et s'échappe à travers les ouvertures 7 du tube de manière à ce que du gaz s'accumule en dessous du couvercle 5 jusqu'à une certaine élévation voisine du bord inférieur de la jupe 8. Ainsi une différence de pression est établie entre la face supérieure et la face inférieure du couvercle, qui est égale à la hauteur de la poche de gaz ($H_{gaz}$) multipliée par la différence de masse volumique entre gaz et la phase liquide ($rho_{ambiant}$ - $rho_{gaz}$) et par la constante de gravité (*g*):

$$dP = H_{gaz}*(rho_{ambiant} - rho_{gaz})*g$$

Cette différence de pression est mise à contribution pour répartir le fluide à distribuer accumulé sous le couvercle 5, qui peut ensuite s'échapper sur toute son aire projetée au moyen des trous calibrés 10 dont le nombre et l'espacement sont calculés pour que la surface débitante totale des trous ne laisse pas passer l'intégralité du gaz entrant dans l'enceinte. Ainsi une portion du gaz qui est injecté, s'échappe du tube et déborde du bord inférieur de la jupe du couvercle pour assurer la présence de la poche de gaz sous le couvercle et la continuité du fonctionnement du dispositif de distribution 1.

Dans la pratique, on s'assure qu'avec des débits de marche au ralenti (typiquement 50% du débit normal), du gaz déborde encore sous le bord inférieur et qu'il se forme toujours une poche gazeuse sous le couvercle.

On utilise la formule de perte de charge $dP = \frac{1}{2} K \, rho_{gaz}(V_{gaz})^2$ pour calculer le débit dans un trou et ainsi déterminer le nombre total de trous nécessaire.

L'inversion de la formule conduit à l'équation du nombre de trous suivante :

$$N_{trous} = \frac{4}{\pi} * \frac{Q_v}{d_{trous}^2} * \sqrt{\frac{rho_{gaz} * K}{2 * dP}}$$

avec

- $Q_v$ : débit volumique de gaz passant par tous les trous qui est lui-même une fraction du débit total de gaz;
- $d_{trous}$ : diamètre des trous
- $rho_{gaz}$ : masse volumique du gaz
- $dP$ : différence de pression imposée par la poche de gaz
- $K$ : coefficient de perte de charge, varie généralement entre 1,5 et 2,7 suivant la géométrie du trou

La figure 3 est le résultat d'une simulation au moyen du logiciel « Fluent » de modélisation numérique de type CFD (Computational Fluid Dynamics selon la terminologie anglo-saxonne) montrant la répartition des flux de matières au niveau du couvercle 5 du dispositif de distribution selon l'art antérieur. Dans la figure 3, les références "G", "L" et "L+G" indiquent que le flux de matières est constitué essentiellement de gaz, de liquide ou d'un mélange gaz et liquide, respectivement.

En référence à la figure 3, on constate que le gaz G débordant sous le bord inférieur (au niveau de la jupe 8) du distributeur 1 ne se détache pas rapidement de ce bord, mais au contraire reste à proximité de la surface supérieure du couvercle 5, et continue à la longer très loin du bord, de manière qu'il se crée un mouvement centripète qui s'exerce sur le gaz G. En conséquence, le gaz a tendance à se concentrer vers l'axe central du dispositif d'où il se détache et, par un effet de cheminée, forme un jet unique au centre de l'enceinte. Par ailleurs la fraction du gaz passant par les trous 10 du couvercle 5 se trouve alors en partie happée par ce panache de gaz provenant du bord inférieur de manière qu'elle est également entraînée vers l'axe central du distributeur 1, créant ainsi une distribution non uniforme du gaz dans le liquide au dessus du couvercle 5 en direction du lit catalytique.

Pour limiter, voire éliminer la formation du panache de fluide s'écoulant le long de la surface externe du couvercle, le demandeur a développé un dispositif de distribution amélioré.

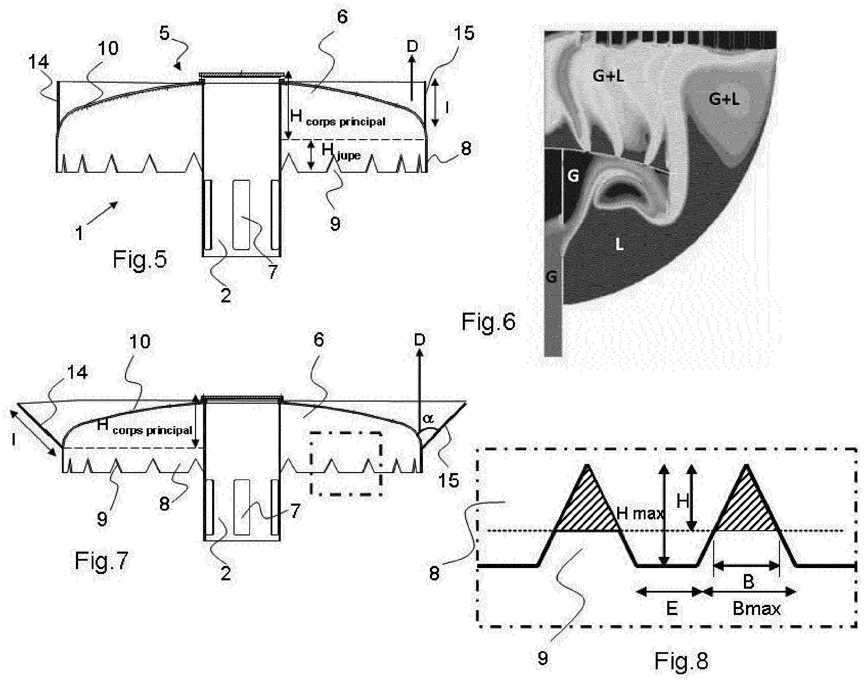

Les figures 4 et 5 sont respectivement une vue en perspective et une vue en coupe selon la ligne AA de la figure 4 d'un premier mode de réalisation d'un dispositif de distribution selon l'invention.

Le dispositif selon l'invention diffère essentiellement du dispositif de la figure 1 par la présence d'un moyen de déflection 14 qui est disposé sur la surface externe du couvercle 5. Ainsi les caractéristiques décrites vis-à-vis du dispositif de la figure 1 et de son principe de fonctionnement sont applicables au dispositif selon l'invention, à moins que cela ne soit indiqué autrement dans la description.

Dans le contexte de l'invention, le moyen de déflection 14 est configuré pour diriger le flux de fluide débordant de la jupe 8 vers la périphérie du couvercle 5, ou maintenir le flux de fluide débordant de la jupe 8 à la périphérie du couvercle 5, l'empêchant ainsi de remonter le long de la surface externe. Comme indiqué sur les figures 4, 5 et 7, le moyen de déflection 14 est de préférence disposé de manière solidaire sur la surface externe du corps principal 6.

Le moyen de déflection forme généralement un angle α avec l'axe D de la jupe 8 compris entre 0 ° et 70°.

Le moyen de déflection 14 est de préférence une collerette continue, s'étendant autour du couvercle 5, qui présente une surface de déflection 15 essentiellement plane.

Selon le mode de réalisation des figures 4 et 5, le moyen de déflection 14 est une collerette circulaire forme un angle α égal à 0°, de sorte que la surface de déflection 15 s'étende dans une direction parallèle à la jupe 8 et dans un sens opposé à l'extrémité de ladite jupe 8. Selon un mode de réalisation préféré, le moyen de déflection est une collerette disposée en prolongement (au droit) de la jupe 8 et à sa verticale.

Cette collerette de déflection est par exemple soudée au couvercle 5 du dispositif de distribution.

Selon un mode de réalisation particulier, le bord libre supérieur du moyen de déflection (ou collerette) est pourvu d'encoches, par exemple de forme triangulaire ou rectangulaire, qui permettent de favoriser par un effet de turbulence la génération de petites bulles de fluide (e.g.

du gaz).

L'effet de la présence du moyen de déflection, selon le mode de réalisation des figures 4 et 5, sur les écoulements de liquide et de gaz dans un réacteur équipé du dispositif de distribution est illustré à la figure 6 dans laquelle les références "G", "L" et "L+G" indiquent que le milieu est constitué essentiellement de gaz, de liquide ou d'un mélange gaz et liquide, respectivement.

On observe que le dispositif selon l'invention permet de maintenir le flux de gaz débordant de la jupe 8 à la périphérie du couvercle, tout en l'empêchant de revenir vers le centre du couvercle de sorte à éviter qu'il ne se crée un jet de gaz central comme avec le distributeur de l'art antérieur. La présence du moyen de déflection permet aussi de garantir une distribution et un mélange homogène dans le milieu ambiant (e.g. un milieu liquide ou milieu gaz/solide) des bulles de gaz s'échappant au delà de la surface supérieure du couvercle 5 par les orifices 10. En effet, le gaz passant par les orifices 10 ne subit plus une succion vers le centre du couvercle due à la remontée du gaz s'échappant de la jupe le long de la surface du couvercle, mais forme des bulles indépendantes et réparties de manière idéale sur toute l'aire projetée du distributeur.

Un autre mode de réalisation du dispositif de distribution de gaz est schématisé à la figure 7. Le dispositif est semblable au mode de réalisation de la figure 5 et diffère en ce que la collerette 14 forme un angle α d'environ 45° avec l'axe D de la jupe 8.

Dans ce mode de réalisation, la surface de déflection est configurée pour diriger le flux de fluide débordant de la jupe vers l'extérieur de la périphérie du couvercle 5, afin de limiter voire annuler le phénomène de succion décrit plus-haut.

En référence aux figures 4 et 5, la longueur l de la surface de déflection 15 du moyen de déflection 14 est choisie de telle sorte que l soit supérieure à 0,5 $H_{corps\ principal}$, et de manière plus préférée supérieure à 2/3 $H_{corps\ principal}$, avec $H_{corps\ principal}$ défini comme étant la distance entre le point d'intersection de l'extrémité inférieure du corps principal 6 avec la jupe 8 et le sommet du corps principal 6. Lorsque la condition mentionnée ci-dessus est respectée, on constate que le fluide est dévié selon une trajectoire pratiquement verticale lorsque la surface de déflection 15 est en prolongement de la jupe 8 selon une direction verticale.

Des encoches 9, par exemple de forme triangulaire comme représentées dans les figures 5, 7 et 8, sont formées dans la jupe 8. Ces encoches 9 permettent avantageusement de limiter les phénomènes d'oscillations de l'interface fluide à distribuer/ le milieu ambiant plus dense dans le volume circonscrit sous le couvercle 5. De préférence, les encoches 9 sont suffisamment éloignées les unes des autres pour que des jets individuels de fluide à distribuer se forment et s'échappent au niveau desdites encoches sans se mélanger avant d'atteindre le sommet du couvercle 5.

En référence à la figure 8, dans le cas où la jupe 8 comprend des encoches, la longueur l de la surface de déflection 15 remplit également la condition suivante :

$$l_{déflecteur} > 0,4\ B_{max},\ \text{de préférence}\ l_{déflecteur} > 0,5\ B_{max},\ \text{de manière encore plus préférée}$$
$$l_{déflecteur} > 0,7\ B_{max},\ B_{max}\ \text{étant la largeur de l'encoche mesurée à partir de l'extrémité de la jupe 8.}$$

Selon un mode de réalisation préféré lorsque la jupe 8 comprend des encoches, le nombre d'encoches sur la circonférence de la jupe est choisi de sorte que la distance E entre deux encoches successives soit supérieure à 2/3 de $B_{max}$ et de préférence supérieure à ¾ de $B_{max}$. De façon avantageuse, on choisit également E et $B_{max}$ de sorte que E + $B_{max}$ > 0,5 ($H_{corps\ principal}$ + $H_{jupe}$) avec $H_{jupe}$ étant la longueur de la jupe 8.

A titre d'exemple un dispositif de distribution selon l'invention présente les caractéristiques suivantes :

- Diamètre de la cloche : 1 à 3 mètres
- Longueur du tube d'admission : 0,5 à 2 mètres
- $H_{corps\ principal}$ : 0,3 à 1 mètre
- $l_{déflecteur}$ : 0,2 à 0,5 mètre
- Diamètre des trous traversant du corps principal: 5 à 50 mm
- Densité des trous traversant du corps principal: 20 à 200 par mètre carré
- Nombre d'encoches : 10 à 30
- Distance E entre deux encoches successives : 50 à 300 mm
- Largeur des encoches $B_{max}$ : 50 à 250 mm

## Revendications

1. Dispositif de distribution (1) d'un fluide comprenant:

    • au moins un moyen d'acheminement du fluide (2) comportant une première et seconde extrémité (3,4) et des ouvertures (7);
    • un couvercle (5) comprenant un corps principal (6) ayant la forme d'une cloche, le corps principal (6) ayant une surface externe et une surface interne et étant solidaire de la seconde extrémité (4) du moyen d'acheminement du fluide (2) par la surface interne, ledit corps principal étant prolongé par une jupe (8) s'étendant dans le sens de la seconde extrémité (4) vers la première extrémité (3) du moyen d'acheminement du fluide (2) et est pourvu d'une pluralité de trous (10),

    et dans lequel le couvercle (5) comprend au moins un moyen de déflection (14) disposé sur sa surface externe et configuré pour diriger ou maintenir le fluide vers ou à la périphérie dudit couvercle (5) et dans lequel le moyen de déflection (14) comprend une surface de déflection (15) et dans lequel le moyen de déflection forme un angle α avec l'axe D de la jupe (8) compris entre 0 et 70°.

**2.** Dispositif selon la revendication 1, dans lequel le moyen de déflection (14) est disposé sur la surface externe du corps principal (6) et est solidaire dudit corps principal (6).

**3.** Dispositif selon la revendication 1, dans lequel la surface de déflection (15) est essentiellement en alignement avec ladite jupe (8) et l'angle α est essentiellement égal à 0°.

**4.** Dispositif selon l'une des revendications précédentes, dans lequel le moyen de déflection (14) forme une collerette circulaire continue agencée à la périphérie du couvercle (5).

**5.** Dispositif selon l'une des revendications précédentes, dans lequel la jupe (8) comporte des encoches (9) situées au niveau de l'extrémité libre de ladite jupe (8).

**6.** Dispositif selon la revendication 5, dans lequel les encoches (9) sont de forme triangulaire ou rectangulaire.

**7.** Dispositif selon l'une des revendications précédentes, dans lequel les trous traversant (10) sont disposés avec un pas régulier sur le corps principal (6).

**8.** Dispositif selon l'une des revendications précédentes, dans lequel les trous traversant (10) sont de section circulaire.

**9.** Dispositif selon l'une des revendications précédentes dans lequel le corps principal (6) est de forme lenticulaire, de section circulaire et prolongé par une jupe (8) cylindrique.

**10.** Réacteur (11) comprenant une enceinte (12) et un dispositif de distribution selon l'une des revendications précédentes disposé dans l'enceinte (12) et dans lequel la section du couvercle (5) du dispositif de distribution est inférieure à la section interne de l'enceinte (12).

**11.** Réacteur selon la revendication 10, dans lequel le dispositif de distribution est placé en fond du réacteur (11).

**12.** Réacteur selon la revendication 10 ou 11 comprenant en outre un lit granulaire de catalyseur disposé en aval du dispositif de distribution (1).

**13.** Réacteur selon la revendication 10 ou 11, dans lequel le réacteur comprend un lit fluidisé de catalyseurs.

**14.** Utilisation d'un réacteur selon l'une des revendications 10 à 13 dans un procédé de traitement d'une charge d'hydrocarbures ou dans un procédé de traitement de catalyseurs.

**Patentansprüche**

**1.** Vorrichtung (1) zur Verteilung eines Fluids, umfassend:

- mindestens ein Mittel zur Beförderung des Fluids (2), umfassen ein erstes und ein zweites Ende (3, 4) und Öffnungen (7);
- einen Deckel (5), umfassend einen Hauptkörper (6) in Form einer Glocke, wobei der Hauptkörper (6) eine Außenfläche und eine Innenfläche aufweist und mit dem zweiten Ende (4) des Mittels zur Beförderung des Fluids (2) durch die Innenfläche verbunden ist, wobei der Hauptkörper durch eine Schürze (8) verlängert ist, die sich in die Richtung vom zweiten Ende (4) zum ersten Ende (3) des Beförderungsmittels des Fluids (2) hin erstreckt, und mit einer Vielzahl von Löchern (10) versehen ist,

wobei der Deckel (5) mindestens ein Ablenkmittel (14) aufweist, das auf seiner Außenfläche angeordnet und dazu vorgesehen ist, das Fluid zu der Peripherie des Deckels (5) zu lenken oder an dieser zu halten, und wobei das Ablenkmittel (14) eine Ablenkfläche (15) umfasst, und wobei das Ablenkmittel einen Winkel α mit der Achse D der Schürze (8) zwischen 0 und 70° bildet.

**2.** Vorrichtung nach Anspruch 1, bei der das Ablenkmittel (14) auf der Außenfläche des Hauptkörpers (6) angeordnet und mit dem Hauptkörper (6) verbunden ist.

**3.** Vorrichtung nach Anspruch 1, bei der die Ablenkfläche (15) im Wesentlichen mit der Schürze (8) fluchtend ist, und der Winkel α im Wesentlichen gleich 0° ist.

**4.** Vorrichtung nach einem der vorhergehenden Ansprüche, bei der das Ablenkmittel (14) einen kontinuierlichen kreisförmigen Kragen bildet, der an der Peripherie des Deckels (5) angeordnet ist.

**5.** Vorrichtung nach einem der vorhergehenden Ansprüche, bei der die Schürze (8) Kerben (9) umfasst, die sich im Bereich des freien Endes der Schürze (8) befinden.

**6.** Vorrichtung nach Anspruch 5, bei der die Kerben (9) dreieckig oder rechteckig sind.

**7.** Vorrichtung nach einem der vorhergehenden Ansprüche, bei der die Durchgangslöcher (10) mit einem regemäßigen Abstand auf dem Hauptkörper (6) angeordnet sind.

**8.** Vorrichtung nach einem der vorhergehenden Ansprüche, bei der die Durchgangslöcher (10) einen kreisförmigen Querschnitt haben.

**9.** Vorrichtung nach einem der vorhergehenden Ansprüche, bei der der Hauptkörper (6) linsenförmig ist, einen kreisförmigen Querschnitt hat und durch eine zylindrische Schürze (8) verlängert ist.

**10.** Reaktor (11), umfassend einen Raum (12) und eine Verteilungsvorrichtung nach einem der vorhergehenden Ansprüche, die in dem Raum (12) angeordnet ist, und bei dem der Querschnitt des Deckels (5) der Verteilungsvorrichtung kleiner als der Innenquerschnitt des Raums (12) ist.

**11.** Reaktor nach Anspruch 10, bei dem die Verteilungsvorrichtung am Boden des Reaktors (11) angeordnet ist.

**12.** Reaktor nach Anspruch 10 oder 11, ferner umfassend ein körniges Katalysatorbett, das stromabwärts zur Verteilungsvorrichtung (1) angeordnet ist.

**13.** Reaktor nach Anspruch 10 oder 11, wobei der Reaktor ein Katalysator-Fließbett umfasst.

**14.** Verwendung eines Reaktors nach einem der Ansprüche 10 bis 13 in einem Verfahren zur Behandlung einer Kohlenwasserstoffladung oder in einem Verfahren zur Behandlung von Katalysatoren.


**Claims**

**1.** A fluid distribution device (1) comprising:

• at least one means (2) for channelling a fluid, comprising a first and a second end (3, 4) and openings (7);
• a cap (5) comprising a principal body (6) in the shape of a bell, the principal body (6) having an outer surface and an inner surface and being integral with the second end (4) of the means (2) for channelling fluid via the inner surface, said principal body being elongated by a skirt (8) extending in the direction of the second end (4) towards the first end (3) of the fluid channelling means (2) and being provided with a plurality of holes (10);

and in which the cap (5) comprises at least one deflection means (14) disposed on its outer surface and configured to direct or maintain the fluid towards or at the periphery of said cap (5), and in which the deflection means (14) comprises a deflection surface (15) and in which the deflection means form an angle α with the axis D of the skirt (8) in the range 0° to 70°.

**2.** The device according to claim 1, in which the deflection means (14) is disposed on the outer surface of the principal body (6) and is integral with said principal body (6).

**3.** The device according to claim 1, in which the deflection surface (15) is essentially in alignment with said skirt (8) and the angle α is essentially equal to 0°.

**4.** The device according to one of the preceding claims, in which the deflection means (14) forms a continuous circular flange arranged at the periphery of the cap (5).

**5.** The device according to one of the preceding claims, in which the skirt (8) comprises notches (9) located at the free end of said skirt (8).

**6.** The device according to claim 5, in which the notches (9) are triangular or rectangular in shape.

**7.** The device according to one of the preceding claims, in which the through holes (10) over the principal body (6) are disposed in a regular pattern.

**8.** The device according to one of the preceding claims, in which the through holes (10) have a circular section.

**9.** The device according to one of the preceding claims, in which the principal body (6) is lenticular in shape with a circular section and is elongated by a cylindrical skirt (8).

**10.** A reactor (11) comprising a vessel (12) and a distribution device according to one of the preceding claims disposed in the vessel (12) and in which the section of the cap (5) of the distribution device is less than the internal section of the vessel (12).

**11.** The reactor according to claim 10, in which the distribution device is placed at the bottom of the reactor (11).

**12.** The reactor according to claim 10 or claim 11, further comprising a granular bed of catalyst disposed downstream of the distribution device (1).

**13.** The reactor according to claim 10 or claim 11, in which the reactor comprises a fluidized bed of catalysts.

**14.** Use of a reactor according to one of claims 10 to 13, in a process for the treatment of a hydrocarbon feed or in a catalyst treatment process.

Fig. 2

Fig. 4

Fig. 1

Fig. 3

Fig.5

Fig.6

Fig.7

Fig.8

EP 2 813 283 B1

**EP 2 813 283 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5571482 A